# EUROPEAN PATENT APPLICATION

(11) **EP 4 760 547 A1**
(43) Date of publication of application: **17.06.2026**
(21) Application number: 24864091.4
(22) Date of filing: 14.05.2024
(51) Int. Cl.: G06F 18/00

(54) **COLLABORATIVE PERCEPTION METHOD, ELECTRONIC DEVICE AND STORAGE MEDIUM**

(30) Priority: 12.09.2023 CN 202311184336
(71) Applicant: ZTE Corporation, Shenzhen, Guangdong 518057 (CN)
(72) Inventor: WANG, Zhongbin, Shenzhen, Guangdong 518057 (CN); DUAN, Xiangyang, Shenzhen, Guangdong 518057 (CN); XIA, Shuqiang, Shenzhen, Guangdong 518057 (CN); YU, Guanghui, Shenzhen, Guangdong 518057 (CN); HU, Liujun, Shenzhen, Guangdong 518057 (CN); MA, Yihua, Shenzhen, Guangdong 518057 (CN); WANG, Yuxin, Shenzhen, Guangdong 518057 (CN)
(74) Representative: Carangelo, Pierluigi
(86) International application number: PCT/CN2024/093210
(87) International publication number: WO 2025/055366

(57) **Abstract**

Provided in the present application are a collaborative perception method, an electronic device and a storage medium. The collaborative perception method comprises: user terminals receiving a fused SLAM result sent by a network-side node, wherein the fused SLAM result is obtained by means of the network-side node fusing first local SLAM results corresponding to a plurality of user terminals; then, the user terminals receiving a first downlink signal sent by the network-side node and determining second local SLAM results on the basis of the first downlink signal; and finally, the user terminals using the fused SLAM result as prior knowledge and using the prior knowledge to update the second local SLAM results.

## Description

### CROSS-REFERENCE TO RELATED APPLICATION

This application is filed on the basis of Chinese patent application No. 2023111843363 filed September 12, 2023, and claims priority of the Chinese patent application, the entire contents of which are incorporated herein by reference.

### TECHNICAL FIELD

The present disclosure relates to the technical field of communication, and in particular, to a collaborative sensing method, an electronic device, and a storage medium.

### BACKGROUND

In next-generation mobile communications, technologies such as millimeter wave technology, ultra-massive multiple-input multiple-output antenna arrays, wide bandwidth, and intelligent metasurface will provide enhanced capabilities for both communication and sensing. Achieving simultaneous localization and mapping (SLAM) using communication signals is expected to be a highly promising functionality.

However, related technologies only disclose the use of Line of Sight (LOS) and Non Line of Sight (NLOS) measurements to perform SLAM. How to achieve high-precision simultaneous localization and mapping remains a technical problem urgently requiring a solution in the field.

### SUMMARY

Embodiments of the present disclosure provide a collaborative sensing method, an electronic device, and a storage medium, which can achieve high-precision simultaneous localization and mapping.

In a first aspect, an embodiment of the present disclosure provides a collaborative sensing method, applied to a user terminal, the method including: receiving a fused simultaneous localization and mapping (SLAM) result from a network-side node, where the fused SLAM result is obtained by the network-side node performing fusion processing on a plurality of first local SLAM results corresponding to respective user terminals; receiving a first downlink signal from the network-side node; determining a second local SLAM result based on the first downlink signal; using the fused SLAM result as prior knowledge, and updating the second local SLAM result using the prior knowledge.

In a second aspect, an embodiment of the present disclosure provides a collaborative sensing method, applied to a network-side node, the method including: obtaining a plurality of first local simultaneous localization and mapping (SLAM) results corresponding to respective user terminals; performing fusion processing on the plurality of first local SLAM results corresponding to the respective user terminals, to obtain a fused SLAM result; sending the fused SLAM result and a first downlink signal to at least one of the user terminals, so that the at least one of the user terminals determines a second local SLAM result based on the first downlink signal, uses the fused SLAM result as prior knowledge, and updates the second local SLAM result using the prior knowledge.

In a third aspect, an embodiment of the present disclosure provides an electronic device, including: one or more processors; a memory, having stored thereon one or more programs, where the one or more programs, when executed by the one or more processors, cause the one or more processors to implement the collaborative sensing method in the first aspect; or, to implement the collaborative sensing method in the second aspect.

In a fourth aspect, an embodiment of the present disclosure provides a computer-readable storage medium, where the computer-readable storage medium stores a computer program which, when executed by a processor, implements the collaborative sensing method in the first aspect; or implements the collaborative sensing method in the second aspect.

In the embodiments of the present disclosure, the user terminal receives the fused SLAM result from the network-side node, where the fused SLAM result is obtained by the network-side node performing fusion processing on the plurality of first local SLAM results corresponding to respective user terminals. Subsequently, the user terminal receives the first downlink signal from the network-side node and determines the second local SLAM result based on the first downlink signal. Finally, the user terminal uses the fused SLAM result as prior knowledge and updates the second local SLAM result with the prior knowledge. Since the local SLAM result of a single user terminal is limited by its own observation field of view, the fused SLAM result can provide the user terminal with broader and more accurate sensing information. By using the fused SLAM result as prior knowledge to assist in updating subsequently obtained local SLAM result, the user terminal can achieve high-precision simultaneous localization and mapping.

### BRIEF DESCRIPTION OF DRAWINGS

The accompanying drawings are provided to further illustrate the technical solutions of the present disclosure and constitute a part of the specification. Together with the embodiments of the present disclosure, they are used to explain the technical solutions of the present disclosure and do not limit the technical solutions of the present disclosure.
FIG. 1 is a schematic diagram of a network architecture provided by an embodiment of the present disclosure;
FIG. 2 is a schematic flowchart of a collaborative sensing method provided by an embodiment of the present disclosure;
FIG. 3 is a schematic flowchart of a collaborative sensing method provided by another embodiment of the present disclosure;
FIG. 3A is a flowchart of an implementation of the collaborative sensing method in FIG. 3;
FIG. 3B is a flowchart of another implementation of the collaborative sensing method in FIG. 3;
FIG. 4 is a flowchart of sub-steps of step S220 in FIG. 3;
FIG. 5 is a flowchart of sub-steps of step S220 in FIG. 3;
FIG. 6 is a flowchart of sub-steps of step S430 in FIG. 5;
FIG. 7 is a schematic flowchart of a collaborative sensing method provided by another embodiment of the present disclosure;
FIG. 8 is a schematic flowchart of a collaborative sensing method provided by another embodiment of the present disclosure;
FIG. 9 is a schematic flowchart of a collaborative sensing method provided by another embodiment of the present disclosure;
FIG. 10 is a schematic flowchart of a collaborative sensing method provided by another embodiment of the present disclosure;
FIG. 10A is a flowchart of an implementation of the collaborative sensing method in FIG. 10;
FIG. 10B is a flowchart of another implementation of the collaborative sensing method in FIG. 10;
FIG. 11 is a schematic flowchart of a collaborative sensing method provided by another embodiment of the present disclosure;
FIG. 11A is a flowchart of an implementation of the collaborative sensing method in FIG. 11;
FIG. 11B is a flowchart of another implementation of the collaborative sensing method in FIG. 11;
FIG. 12 is a schematic flowchart of a collaborative sensing method provided by another embodiment of the present disclosure;
FIG. 12A is a flowchart of an implementation of the collaborative sensing method in FIG. 12;
FIG. 12B is a flowchart of another implementation of the collaborative sensing method in FIG. 12;
FIG. 13 is a schematic flowchart of a collaborative sensing method provided by another embodiment of the present disclosure;
FIG. 13A is a flowchart of an implementation of the collaborative sensing method in FIG. 13;
FIG. 13B is a flowchart of another implementation of the collaborative sensing method in FIG. 13;
FIG. 14 is a schematic structural diagram of an electronic device provided by an embodiment of the present disclosure.

### DETAILED DESCRIPTION

To enable those of ordinary skills in the art to better understand the technical solutions of the present disclosure, a collaborative sensing method, a collaborative sensing apparatus, an electronic device, and a computer-readable storage medium provided by the present disclosure are described in detail below with reference to the accompanying drawings.

Example embodiments will be described more fully hereinafter with reference to the accompanying drawings, but the described example embodiments may be embodied in different forms and should not be construed as limited to the embodiments set forth herein. On the contrary, these embodiments are provided to make the present disclosure thorough and complete, and will fully convey the scope of the present disclosure to those of ordinary skills in the art.

As used herein, the term "and/or" includes any and all combinations of one or more of the associated listed items.

The terminology used herein is for the purpose of describing particular embodiments only and is not intended to limit the present disclosure. As used herein, the singular forms "a," "an," and "the" are intended to include the plural forms as well, unless the context clearly indicates otherwise. It will be further understood that when the terms "comprise/include" and/or "made of" are used in this specification, they specify the presence of stated features, integers, steps, operations, elements, and/or components, but do not preclude the presence or addition of one or more other features, integers, steps, operations, elements, components, and/or combinations thereof.

In the following description, reference is made to "some embodiments," which describe a subset of all possible embodiments. However, it should be understood that "some embodiments" may be the same subset or different subsets of all possible embodiments and may be combined with each other without conflict.

Unless otherwise defined, all terms (including technical and scientific terms) used herein have the same meaning as commonly understood by those of ordinary skills in the art. It will be further understood that terms, such as those defined in commonly used dictionaries, should be interpreted as having meanings consistent with their meanings in the context of the relevant art and the background of the present disclosure, and will not be interpreted in an idealized or overly formal sense unless expressly so defined in the embodiments of the present disclosure.

In next-generation mobile communications, technologies such as millimeter wave technology, ultra-massive multiple-input multiple-output antenna arrays, wide bandwidth, and intelligent metasurface will provide enhanced capabilities for both communication and sensing. Achieving simultaneous localization and mapping (SLAM) using communication signals is expected to be a highly promising functionality.

The communication environment of a base station (BS) not only includes users who are engaged in communication, but also includes static scatterers such as street lamps, buildings, and mountains. Due to the presence of these scatterers, radio waves propagating through the environment will form multipath components. In cellular mobile communication systems, a portion of radio waves travels directly from the BS to the user equipment (UE), forming a Line of Sight (LOS) path. Another portion of radio waves is scattered by scatterers before reaching the UE, forming Non Line of Sight (NLOS) paths. Since the NLOS paths undergo scattering by scatterers, they carry information about these scatterers in the environment, endowing them with the capability to sense environmental information. Consequently, by utilizing both the LOS and NLOS paths formed during radio wave propagation in the environment, it is possible to inversely derive the state information of the UE as well as the environmental information of its surroundings.

However, related technologies only disclose the use of LOS and NLOS measurements to perform SLAM. How to achieve high-precision simultaneous localization and mapping remains a technical problem urgently requiring a solution in the field.

Based on this, embodiments of the present disclosure provide a collaborative sensing method, an electronic device, and a storage medium, which can achieve high-precision simultaneous localization and mapping.

Before introducing the technical solutions of the embodiments of the present disclosure, the network architecture of the embodiments of the present disclosure will first be described. The network architecture of the embodiments of the present disclosure includes at least one network-side node and at least one user terminal. The user terminal is communicatively connected to the network-side node, and both the user terminal and the network-side node are designed based on Integrated Sensing and Communication (ISAC). The sensing mechanism employed is downlink sensing, where the user terminal receives an integrated downlink signal sent by the network-side node and extracts relevant sensing information from the integrated downlink signal to accomplish downlink sensing.

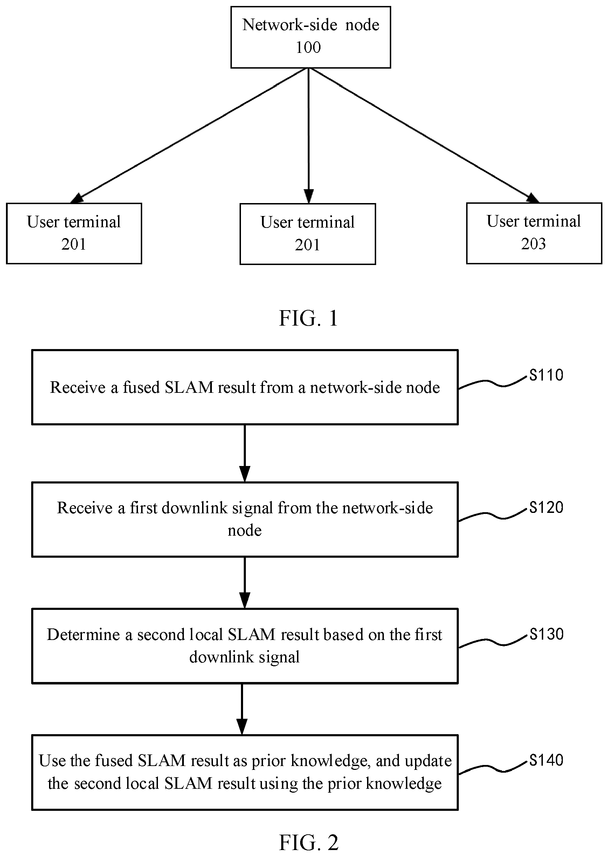

Please refer to FIG. 1, which illustrates a schematic diagram of a network architecture provided by an embodiment of the present disclosure. As shown in FIG. 1, the network architecture includes a network-side node 100, a user terminal 201, a user terminal 202, and a user terminal 203. The user terminals are communicatively connected to the network-side node. The network-side node is configured to transmit an integrated downlink signal to the user terminals, while the user terminals are configured to receive the integrated downlink signal sent by the network-side node and extract relevant sensing information from the integrated downlink signal to accomplish downlink sensing.

The user terminal involved in the embodiments of the present disclosure may also be referred to as user equipment (UE), mobile station (MS), mobile terminal (MT), terminal, etc. The user terminal is a device that provides voice and/or data connectivity to users. For example, the user terminal may include a handheld device, a vehicle-mounted device, etc., that has wireless connectivity functions. Currently, the user terminal may include: a mobile phone, a tablet computer, a laptop, a handheld computer, a mobile internet devices (MID), a wearable device, a virtual reality (VR) device, an augmented reality (AR) device, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, or a wireless terminal that support vehicle-to-vehicle (V2V) communication, etc.

The network-side node involved in the embodiments of the present disclosure includes an access network node, or includes both an access network node and a core network node.

The access network node may be a base station (BS), a node B, an evolved NodeB (eNodeB or eNB), a transmission reception point (TRP), a next-generation NodeB (gNB) in 5th Generation (5G) mobile communication system, an access network device in an open radio access network (O-RAN or open RAN), a next-generation base station in 6th Generation (6G) mobile communication system, a base station in future mobile communication system, or an access network node in wireless fidelity (WiFi) system, etc. Alternatively, the access network node may be a module or unit that performs part of the functions of a base station, such as a central unit (CU), a distributed unit (DU), a central unit control plane (CU-CP) module, or a central unit user plane (CU-UP) module. The access network node may be a macro base station, a micro base station, an indoor station, or may be a reconfigurable intelligent surface (RIS), a relay node, or a donor node, etc. The specific technology and equipment form adopted by the access network node are not limited in the present disclosure.

The core network node refers to a network element in the core network, which may be a core network element such as an Access and Mobility Management Function (AMF) network element or a User Plane Function (UPF) network element.

The user terminal may connect to the base station wirelessly and access the core network node through the base station.

Embodiments of the present disclosure first propose a collaborative sensing method, which is applied to a user terminal. Please refer to FIG. 2, which illustrates a collaborative sensing method provided by an embodiment of the present disclosure. As shown in FIG. 2, the method includes but is not limited to steps S110 to S140.

In S110, a fused simultaneous localization and mapping (SLAM) result is received from a network-side node, where the fused SLAM result is obtained by the network-side node performing fusion processing on a plurality of first local SLAM results corresponding to respective user terminals.

It can be understood that the current user terminal receives the fused SLAM result from the network-side node. Prior to this, the network-side node performs fusion processing on the first local SLAM results of multiple user terminals to obtain the fused SLAM result. The plurality of first local SLAM results corresponding to respective user terminals may include the first local SLAM result corresponding to the current user terminal. In the case where the current user terminal is a new user terminal entering the service area, the first local SLAM results of multiple user terminals are the first local SLAM results corresponding to other user terminals within the service area of the network-side node.

It should be noted that, with respect to the first local SLAM result corresponding to a user terminal, the user terminal may obtain raw measurement data by extracting it from the downlink sensing signal received from the network-side node, and then derive the first local SLAM result based on the raw measurement data. Alternatively, the user terminal may extract raw measurement data from downlink sensing information received from the network-side node, upload the raw measurement data to the network-side node, and the network-side node may determine the first local SLAM result corresponding to the user terminal based on the uploaded raw measurement data.

In S120, a first downlink signal is received from the network-side node.

It should be understood that the first downlink signal is a downlink sensing signal for integrated sensing and communication. The user terminal can extract corresponding sensing information from the downlink sensing signal and perform downlink sensing based on the sensing information.

In S 130, a second local SLAM result is determined based on the first downlink signal.

It can be understood that after receiving the first downlink signal from the network-side node, the user terminal performs SLAM construction based on the first downlink signal to obtain a second local SLAM result. Specifically, the user terminal may extract raw measurement data from the first downlink signal and obtain the second local SLAM result based on the raw measurement data.

A portion of the radio waves in the downlink signal directly reaches the user terminal, forming a LOS path, while another portion of the radio waves reaches the user terminal after being scattered by scatterers, forming NLOS paths. Since the NLOS paths undergo scattering by scatterers, they carry information about the scatterers in the environment. Therefore, by calculating raw measurement data such as Angle of Arrival (AOA), Time Difference of Arrival (TDOA), and Frequency Difference of Arrival (FDOA) of the downlink signal, and based on the above raw measurement data, a local SLAM result may be obtained through inversion using a preset SLAM algorithm, thereby achieving SLAM construction. The SLAM algorithm may include, but not limited to, Belief Propagation-based SLAM (BP-SLAM) and Probability Hypothesis Density-based SLAM (PHD-SLAM) algorithms.

In S 140, the fused SLAM result is used as prior knowledge and the second local SLAM result is updated using the prior knowledge.

It should be understood that the fused SLAM result integrates the local SLAM results of multiple user terminals within the service area of the base station. By using the fused SLAM result as prior knowledge to update the second local SLAM result, the user terminal can overcome the limitation of its own observation field of view, which often leads to low accuracy in the obtained SLAM result, thereby enabling the user to obtain a more accurate SLAM result.

After updating the second local SLAM result using the fused SLAM result, the user terminal may choose to send the updated second local SLAM result to the network-side node. The network-side node then performs fusion processing on the updated second local SLAM results from multiple user terminals and redistributes the fused SLAM result to the user terminals. The continuous fusion and iterative updating of sensing results between the user terminal and the network-side node enable high-precision SLAM. The updated and more accurate SLAM can be used to assist communication between the user terminal and the network-side node, thereby enhancing communication performance.

It can be understood that the user terminal receives the fused SLAM result from the network-side node, where the fused SLAM result is obtained by the network-side node performing fusion processing on the plurality of first local SLAM results corresponding to respective user terminals. Subsequently, the user terminal receives the first downlink signal from the network-side node and determines the second local SLAM result based on the first downlink signal. Finally, the user terminal uses the fused SLAM result as prior knowledge and updates the second local SLAM result with the prior knowledge. Since the local SLAM result of a single user terminal is limited by its own observation field of view, the fused SLAM result can provide the user terminal with broader and more accurate sensing information. By using the fused SLAM result as prior knowledge to assist in updating subsequently obtained local SLAM result, the user terminal can achieve high-precision simultaneous localization and mapping.

In practical application environments, the number of user terminals frequently changes. When the network-side node detects that a new user terminal enters the service area, it sends the first downlink signal and the fused SLAM result, which is obtained by fusing the plurality of first local SLAM results corresponding to respective user terminals, to the new user terminal. The new user terminal determines the second local SLAM result based on the first downlink signal and uses the fused SLAM result as prior knowledge to assist in updating the second local SLAM result. This enables the newly entered user terminal within the BS service area to quickly obtain a more accurate and comprehensive SLAM result.

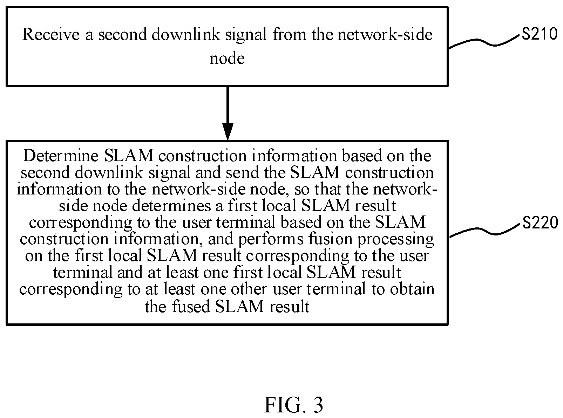

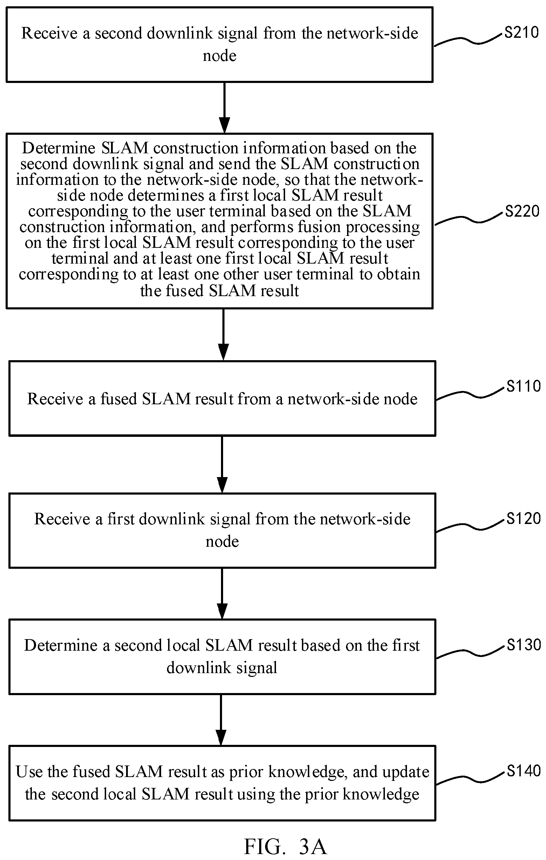

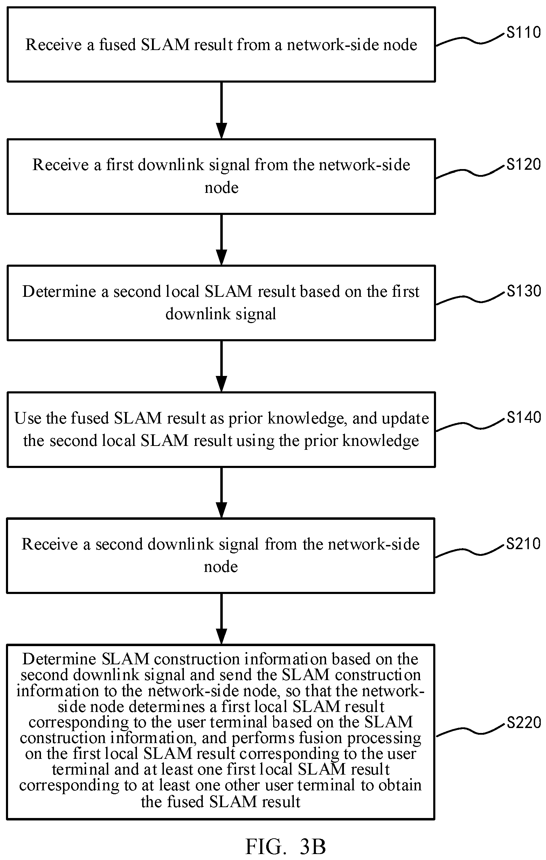

In some embodiments, please refer to FIG. 3, which illustrates another embodiment of the collaborative sensing method provided by the present disclosure. The collaborative sensing method further includes step S210 and step S220.

In S210, a second downlink signal is received from the network-side node.

In S220, SLAM construction information is determined based on the second downlink signal, and the SLAM construction information is sent to the network-side node, so that the network-side node determines a first local SLAM result corresponding to the user terminal according to the SLAM construction information, and performs fusion processing on the first local SLAM result corresponding to the user terminal and at least one first local SLAM result corresponding to at least one other user terminal to obtain the fused SLAM result.

In an embodiment, please refer to FIG. 3A, which illustrates a flowchart of an implementation of the collaborative sensing method in FIG. 3. As shown in FIG. 3A, before receiving the fused SLAM result from the network-side node, the network-side node sends the second downlink signal to the user terminal. Subsequently, the user terminal determines SLAM construction information based on the second downlink signal and sends the SLAM construction information to the network-side node. The network-side node determines the first local SLAM result corresponding to the user terminal according to the received SLAM construction information, and then performs fusion processing on the first local SLAM result corresponding to the user terminal and at least one first local SLAM result corresponding to at least one other user terminal to obtain the fused SLAM result. This enables the user terminal to use the fused SLAM result as prior knowledge to update subsequent local SLAM results, thereby obtaining a more accurate SLAM result.

In an embodiment, please refer to FIG. 3B, which illustrates a flowchart of another implementation of the collaborative sensing method in FIG. 3. As shown in FIG. 3B, after the user terminal uses the fused SLAM result as prior knowledge and updates the second local SLAM result with the prior knowledge, the network-side node sends the second downlink signal to the user terminal again. The user terminal receives the second downlink signal sent by the network-side node, then determines SLAM construction information based on the second downlink signal and sends the SLAM construction information to the network-side node. The network-side node determines the first local SLAM result corresponding to the user terminal according to the received SLAM construction information, and then performs fusion processing on the first local SLAM result corresponding to the user terminal and at least one first local SLAM result corresponding to at least one other user terminal to obtain the fused SLAM result. On one hand, the user terminal can use the previous fused SLAM result as prior knowledge to update the SLAM construction information, enabling the network-side node to obtain the fused SLAM result based on multiple local SLAM results which are more accurate. On the other hand, the network-side node can distribute the fused SLAM result obtained based on the second downlink signal to the user terminal, allowing the user terminal to obtain a new fused SLAM result and use it as prior knowledge to iteratively update subsequent local SLAM results.

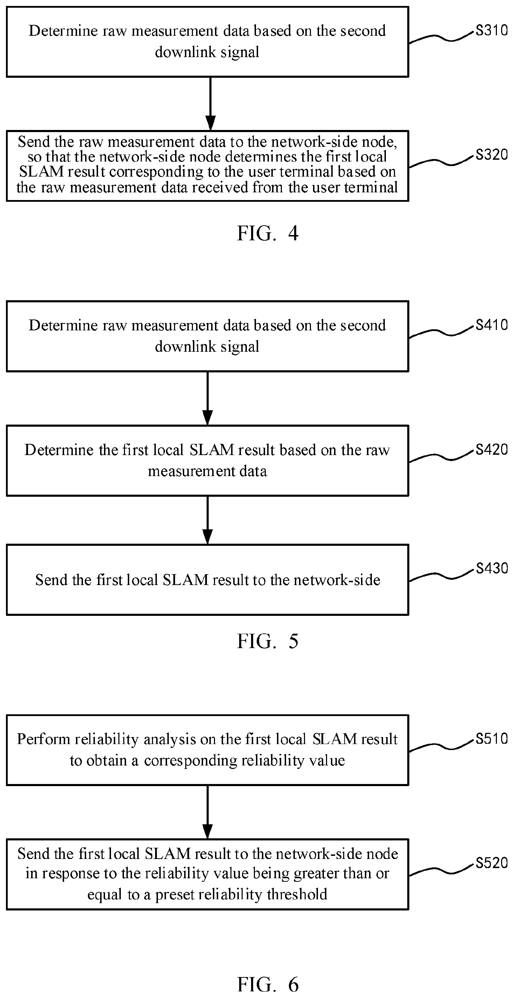

In some embodiments, the SLAM construction information includes raw measurement data. Please refer to FIG. 4, which illustrates a flowchart of sub-steps of step S220 in FIG. 3. As shown in FIG. 4, step S220 includes but is not limited to step S310 and step S320.

In S310, the raw measurement data are determined based on the second downlink signal.

In S320, the raw measurement data is sent to the network-side node, so that the network-side node determines the first local SLAM result corresponding to the user terminal according to the raw measurement data received from the user terminal.

It should be understood that the user terminal receives the second downlink signal and extracts raw measurement data within the observation field of view from the second downlink signal. Subsequently, the user terminal sends the raw measurement data to the network-side node, which then determines the first local SLAM result corresponding to the user terminal based on the raw measurement data uploaded by the user terminal. In other words, the network-side node constructs the corresponding SLAM result for the user terminal, thereby providing SLAM construction services for user terminals with limited computational capabilities.

In some embodiments, the SLAM construction information includes the first local SLAM result of the user terminal. Please refer to FIG. 5, which illustrates a flowchart of sub-steps of step S220 in FIG. 3. As shown in FIG. 5, step S220 includes but is not limited to step S410 through step S430.

In S410, raw measurement data are determined based on the second downlink signal.

In S420, the first local SLAM result is determined based on the raw measurement data.

In S430, the first local SLAM result is sent to the network-side node.

It should be understood that the user terminal receives the second downlink signal and extracts raw measurement data within the observation field of view from the second downlink signal. Subsequently, the user terminal determines the first local SLAM result based on the raw measurement data. Finally, the user terminal sends the first local SLAM result to the network-side node. In other words, the user terminal receives the second downlink signal sent by the network-side node and obtains the corresponding first local SLAM result based on the second downlink signal. The network-side node only needs to perform fusion processing on the first local SLAM results uploaded by multiple user terminals, thereby reducing the computational burden on the network-side node.

It should be noted that the method for SLAM construction for different user terminals within the service area of the base station can be determined based on the computational capability of the user terminal or the load level of the network-side node, which is not limited in the embodiments of the present disclosure.

In some embodiments, please refer to FIG. 6, which illustrates a flowchart of sub-steps of step S430 in FIG. 5. As shown in FIG. 6, step S430 includes but is not limited to step S510 and step S520.

In S510, reliability analysis is performed on the first local SLAM result to obtain a corresponding reliability value.

In S520, in response to the reliability value being greater than or equal to a preset reliability threshold, the first local SLAM result is sent to the network-side node.

It should be understood that before sending the first local SLAM result to the network-side node, the user terminal first performs reliability analysis on the first local SLAM result to obtain the reliability value of the first local SLAM result constructed this time. When the reliability value is greater than or equal to the preset reliability threshold, the user terminal sends the first local SLAM result to the network-side node. When the reliability value is less than the preset reliability threshold, the user terminal does not send the first local SLAM result. By performing reliability analysis on the first local SLAM result, the user terminal only sends the first local SLAM result with a high reliability value to the network-side node. That is, the network-side node only receives the first local SLAM results whose reliability values exceed the reliability threshold, thereby making the fused SLAM result obtained by the network-side node more accurate.

It should be noted that the reliability threshold may be sent to the user terminal by the network-side node. For example, the network-side node includes reliability threshold information in the downlink signal, thereby distributing the reliability threshold to each user terminal via the network-side node. This facilitates the management of SLAM result construction for each user terminal within the service area of the same base station.

In some embodiments, the SLAM construction information further includes the reliability value corresponding to the first local SLAM result.

In the collaborative sensing method, the fusion processing includes:
performing, by the network-side node, weighted fusion processing on the plurality of first local SLAM results corresponding to respective user terminals according to the reliability values of the respective first local SLAM results, to obtain a fused SLAM result.

It should be understood that the SLAM construction information uploaded by the user includes the reliability value corresponding to the first local SLAM result. When the SLAM construction information further includes the reliability value corresponding to the first local SLAM result, during the process of the network-side node fusing SLAM results, the network-side node performs weighted fusion processing on the plurality of first local SLAM results corresponding to respective user terminals according to the reliability values of the first local SLAM results, to obtain a fused SLAM result. For example, a higher weight is assigned to the first local SLAM result with a high reliability value, and a lower weight is assigned to the local SLAM result with a low reliability value. That is, the proportion of local SLAM results with high reliability in the fused SLAM result is increased, while the proportion of local SLAM results with low reliability in the fused SLAM result is reduced, thereby improving the accuracy of the fused SLAM result.

In some embodiments, each of the first local SLAM results includes at least one of user terminal state information, or environmental information.

It should be understood that the first local SLAM result includes user terminal state information, or includes environmental information, or includes both user terminal state information and environmental information. For example, when the actual application requires environmental information within the observation field of view of the user terminal and the local SLAM result is constructed by the user terminal, after obtaining the raw measurement data, the user terminal determines the first local SLAM result based on the raw measurement data, thereby transmitting the environmental information in the first local SLAM result to the network-side node. Alternatively, when the actual application requires the state information of the user terminal and the local SLAM result is constructed by the user terminal, after obtaining the raw measurement data, the user terminal determines the first local SLAM result based on the raw measurement data, thereby transmitting the user terminal state information in the first local SLAM result to the network-side node.

It should be noted that the requirement for the SLAM result may be communicated to the user terminal by the network-side node. For example, the network-side node may include information about the requirement for the SLAM result in the downlink signal, thereby transmitting the requirement for the SLAM result to each user terminal, so that the user terminal uploads the local SLAM result that meets the specific requirement.

In some embodiments, the user terminal state information includes at least one of: velocity information of the user terminal, position information of the user terminal, orientation information of the user terminal, or clock bias information of the user terminal.

It should be understood that the user terminal receives the downlink signal sent by the network-side node, estimates delay information, Doppler information, and angle spectrum information from the LOS path and the NLOS path of the downlink signal, calculates a distance between the user terminal and the network-side node, and the velocity information and the orientation information of the user terminal, thereby computing the position information and the clock bias information of the user terminal.

It should be noted that the specific content included in the user terminal state information within the local SLAM result is determined by the actual requirement for the SLAM result. For example, to achieve real-time positioning of the user terminal, the user terminal state information in the local SLAM result should include the velocity information, the position information, the orientation information, and the clock bias information of the user terminal.

In some embodiments, the environmental information includes at least one of: scattering surface information in the environment, scattering point position information in the environment, or scattering coefficient of the environment.

It should be noted that in the scattering phenomenon, the incident wave scatters on a surface with scattering characteristics, forming scattering points in the environment. Here, the scattering surface information in the environment refers to the characteristic information of surfaces with scattering properties in the environment, such as surface shape, roughness, material, etc., or the position of the scattering surface, or the characteristic information representing the position of the scattering surface. The scattering point position information in the environment refers to the position information of points where scattering phenomena occur in the environment. The scattering coefficient is a physical quantity describing the scattering phenomenon in the environment, used to quantify the interaction between the incident wave and the scattering surface. The magnitude of the scattering coefficient is related to the characteristics of the scattering surface and the parameters of the incident wave.

It should be understood that since the NLOS path carrying information about scatterers in the environment exist in the downlink signal, by calculating the raw measurement data such as AOA, TDOA, and FDOA of the downlink signal, scattering-related parameters such as the scattering surface information, the scattering point position information, and the scattering coefficient of the environment where the user terminal is located can be further inverted.

It should be noted that the specific content included in the environmental information within the local SLAM result is determined by the actual requirement for the SLAM result. For example, to achieve map construction, the environmental information in the local SLAM result should include the scattering surface information in the environment, the scattering point position information in the environment, or the scattering coefficient of the environment.

In some embodiments, the network-side node is an access network node.

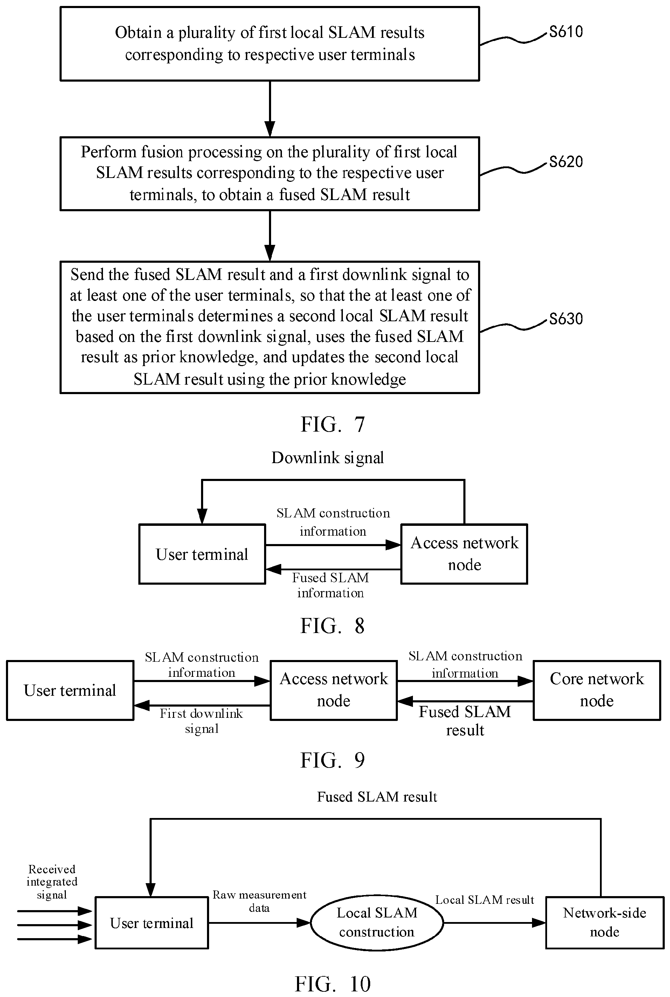

Please refer to FIG. 8, which illustrates a schematic flowchart of a collaborative sensing method provided by an embodiment of the present disclosure. As shown in FIG. 8, the network-side node is an access network node, and the access network node is communicatively connected to the user terminal. In the collaborative sensing method provided by the embodiment of the present disclosure, the access network node sends a downlink signal to the user terminal. The user terminal determines SLAM construction information based on the downlink signal received from the access network node and sends the SLAM construction information to the access network node. The access network node determines a local SLAM result corresponding to the user terminal based on the SLAM construction information received from the user terminal. The access network node performs fusion processing on the local SLAM result corresponding to the user terminal and at least one local SLAM result corresponding to at least one other user terminal to obtain a fused SLAM result. The access network node sends the fused SLAM result to the user terminal, and subsequently, the user terminal uses the fused SLAM result as prior knowledge for SLAM update and iteration.

In an embodiment, the SLAM construction information includes raw measurement data. The user terminal determines the raw measurement data based on the downlink signal and sends the raw measurement data to the access network node. The access network node determines a local SLAM result corresponding to the user terminal based on the raw measurement data received from the user terminal. The access network node performs fusion processing on the local SLAM result corresponding to the user terminal and at least one local SLAM result corresponding to at least one other user terminal to obtain a fused SLAM result. The access network node sends the fused SLAM result to the user terminal.

In another embodiment, the SLAM construction information includes a local SLAM result of the user terminal. The user terminal determines raw measurement data based on the downlink signal and determines the local SLAM result based on the raw measurement data. Subsequently, the user terminal sends the local SLAM result to the access network node. The access network node performs fusion processing on the local SLAM result corresponding to the user terminal and at least one local SLAM result corresponding to at least one other user terminal to obtain a fused SLAM result. The access network node sends the fused SLAM result to the user terminal.

In some embodiments, the network-side node includes an access network node and a core network node. The access network node is configured to send a first downlink signal. The core network node is configured to perform fusion processing and send the fused SLAM result to the user terminal.

Please refer to FIG. 9, which illustrates a schematic flowchart of a collaborative sensing method provided by an embodiment of the present disclosure. As shown in FIG. 9, the network-side node includes an access network node and a core network node. The access network node is communicatively connected to the user terminal, and the core network node is communicatively connected to the access network node. In an embodiment of the present disclosure, the access network node is configured to send a first downlink signal, and the core network node is configured to perform fusion processing and send the fused SLAM result to the user terminal. By having the core network node perform SLAM result fusion instead of the access network node, the computational load on the access network node can be reduced.

In some embodiments, the fused SLAM result is sent by the core network node to the access network node and then forwarded by the access network node to the user terminal.

In an embodiment of the present disclosure, the access network node, which serves as a relay node between the user terminal and the core network node, is configured to forward the fused SLAM result sent by the core network node to the user terminal, enabling the user terminal to use the fused SLAM result as prior knowledge for SLAM update and iteration. Specifically, the core network node performs fusion processing on the local SLAM result corresponding to the user terminal and at least one local SLAM result corresponding to at least one other user terminal to obtain the fused SLAM result. The core network node sends the fused SLAM result to the access network node, and the access network node sends the fused SLAM result to the user terminal. Subsequently, the user terminal uses the fused SLAM result as prior knowledge for SLAM update and iteration.

In some embodiments, the user terminal sends the SLAM construction information to the access network node, which then forwards it to the core network node.

In an embodiment of the present disclosure, the access network node, which serves as a relay node between the user terminal and the core network node, is configured to forward the SLAM construction information sent by the user terminal to the core network node, enabling the core network node to perform SLAM result fusion. Specifically, the access network node sends a downlink signal to the user terminal. The user terminal determines the SLAM construction information based on the downlink signal received from the access network node and sends the SLAM construction information to the access network node. The access network node then forwards the SLAM construction information to the core network node. The core network node determines the local SLAM result corresponding to the user terminal based on the SLAM construction information received from the access network node. The core network node then performs fusion processing on the local SLAM result corresponding to the user terminal and at least one local SLAM result corresponding to at least one other user terminal to obtain the fused SLAM result.

In an embodiment, the SLAM construction information includes raw measurement data. The user terminal determines the raw measurement data based on the downlink signal and sends the raw measurement data to the access network node. The access network node forwards the raw measurement data to the core network node. The core network node determines the local SLAM result corresponding to the user terminal based on the raw measurement data received from the access network node. The core network node then performs fusion processing on the local SLAM result corresponding to the user terminal and at least one local SLAM result corresponding to at least one other user terminal to obtain the fused SLAM result. The core network node sends the fused SLAM result to the access network node, and the access network node sends the fused SLAM result to the user terminal.

In the above embodiment, the collaborative sensing method further includes the following steps. The access network node determines the local SLAM result corresponding to the user terminal based on the raw measurement data received from the user terminal. The access network node sends the local SLAM result to the core network node. The core network node performs fusion processing on the local SLAM result corresponding to the user terminal and at least one local SLAM result corresponding to at least one other user terminal to obtain the fused SLAM result. The core network node sends the fused SLAM result to the access network node, and the access network node sends the fused SLAM result to the user terminal.

In another embodiment, the SLAM construction information includes the local SLAM result of the user terminal. The user terminal determines the raw measurement data based on the downlink signal and determines the local SLAM result based on the raw measurement data. Subsequently, the user terminal sends the local SLAM result to the access network node. The access network node forwards the local SLAM result to the core network node. The core network node performs fusion processing on the local SLAM result corresponding to the user terminal and at least one local SLAM result corresponding to at least one other user terminal to obtain the fused SLAM result. The core network node sends the fused SLAM result to the access network node, and the access network node sends the fused SLAM result to the user terminal.

Embodiments of the present disclosure further proposes a collaborative sensing method, which is applied to a network-side node. Please refer to FIG. 7, which illustrates a collaborative sensing method provided by an embodiment of the present disclosure. As shown in FIG. 7, the collaborative sensing method includes, but is not limited to, steps S610 to S630.

In S610, a plurality of first local simultaneous localization and mapping (SLAM) results corresponding to respective user terminals are obtained.

In S620, fusion processing is performed on the plurality of first local SLAM results corresponding to the respective user terminals, to obtain a fused SLAM result.

In S630, the fused SLAM result and a first downlink signal are sent to at least one of the user terminals, so that the at least one of the user terminals determines a second local SLAM result based on the first downlink signal, uses the fused SLAM result as prior knowledge, and updates the second local SLAM result using the prior knowledge.

It should be noted that when distributing the fused SLAM result, the network-side node may choose to distribute the entire fused SLAM result to each user terminal within the service area for SLAM iteration and update. Alternatively, based on the user terminal requiring SLAM iteration and update, the network-side node may choose to distribute the corresponding portion of the fused SLAM result to that user terminal for SLAM iteration and update.

It can be understood that the network-side node obtains the first local SLAM results corresponding to the respective user terminals, then performs fusion processing on the first local SLAM results corresponding to the respective user terminals to obtain the fused SLAM result, and finally sends the fused SLAM result and the first downlink signal to at least one user terminal. The at least one user terminal determines the second local SLAM result based on the first downlink signal, uses the fused SLAM result as prior knowledge and updates the second local SLAM result with the prior knowledge. Since the local SLAM result of a single user terminal is limited by its own observation field of view, the fused SLAM result can provide the user terminal with broader and more accurate sensing information. By using the fused SLAM result as prior knowledge to assist in updating subsequently obtained local SLAM result, the user terminal can achieve high-precision simultaneous localization and mapping.

In some embodiments, obtaining the plurality of first local simultaneous localization and mapping (SLAM) results corresponding to the respective user terminals includes:
sending a second downlink signal to the plurality of user terminals, so that each of the user terminals determines SLAM construction information based on the second downlink signal;
receiving the SLAM construction information sent by the plurality of user terminals;
obtaining the first local SLAM results corresponding to the respective user terminals based on the SLAM construction information sent by the respective user terminals.

In some embodiments, the SLAM construction information includes raw measurement data corresponding to the respective user terminal, and obtaining the first local SLAM results corresponding to the respective user terminals based on the SLAM construction information sent by the respective user terminals includes:
determining the first local SLAM results corresponding to the respective user terminals based on the raw measurement data sent by the plurality of user terminals.

In some embodiments, the SLAM construction information includes the respective first local SLAM result corresponding to the respective user terminal.

In some embodiments, the SLAM construction information further includes a reliability value corresponding to the respective first local SLAM result, and performing fusion processing on the plurality of first local SLAM results corresponding to the respective user terminals, to obtain the fused SLAM result includes:
performing weighted fusion processing on the first local SLAM results corresponding to the respective user terminals based on the reliability values of the first local SLAM results corresponding to the respective user terminals, to obtain the fused SLAM result.

In some embodiments, sending the fused SLAM result and the first downlink signal to the at least one of the user terminals includes:
in response to detecting that a new user terminal enters a service area, sending the fused SLAM result and the first downlink signal to the new user terminal.

In some embodiments, each of the first local SLAM results includes at least one of user terminal state information, or environmental information.

In some embodiments, the user terminal state information includes at least one of: velocity information of the user terminal, position information of the user terminal, orientation information of the user terminal, or clock bias information of the user terminal.

In some embodiments, the environmental information includes at least one of: scattering surface information in the environment, scattering point position information in the environment, or scattering coefficient of the environment.

In some embodiments, the network-side node is an access network node.

In some embodiments, the network-side node includes an access network node and a core network node. The access network node is configured to send the first downlink signal and the second downlink signal. The core network node is configured to perform the fusion processing and send the fused SLAM result to the at least one of the user terminals.

In some embodiments, the fused SLAM result is sent by the core network node to the access network node and then forwarded by the access network node to the at least one of the user terminals.

In some embodiments, the SLAM construction information sent by the at least one user terminal is received by the access network node and sent by the access network node to the core network node.

It should be noted that the above embodiments describe the collaborative sensing method applied to the network-side node. For its specific implementation and beneficial effects, reference may be made to the relevant descriptions in the collaborative sensing method applied to the user terminal, which will not be reiterated here.

The collaborative sensing method provided by embodiments of the present disclosure is described below through specific examples.

### Embodiment 1

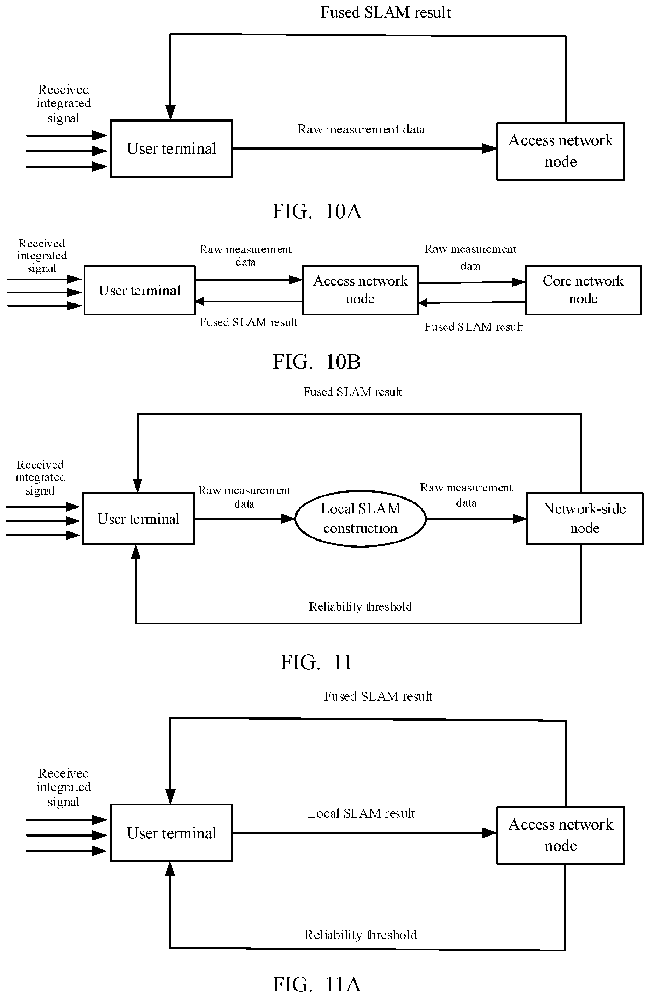

Please refer to FIG. 10, which illustrates a collaborative sensing method provided by an embodiment of the present disclosure. As shown in FIG. 10, a user terminal receives an integrated downlink sensing signal from a base station and determines raw measurement data based on the downlink sensing signal, then uploads the raw measurement data to a network-side node. The network-side node completes SLAM construction based on the raw measurement data uploaded by the user terminal. Subsequently, the network-side node performs fusion processing on the local SLAM results of multiple user terminals to obtain a fused SLAM result. The network-side node sends the fused SLAM result to the user terminal. After receiving the fused SLAM result delivered by the network-side node, the user terminal uses the fused SLAM result together with subsequent raw measurement data for iteratively updating the SLAM result.

In an example of Embodiment 1, please refer to FIG. 10A, which illustrates a flowchart of an implementation of the collaborative sensing method in FIG. 10. As shown in FIG. 10A, the network-side node is an access network node. A user terminal receives an integrated downlink sensing signal from a base station and determines raw measurement data based on the downlink sensing signal, then uploads the raw measurement data to the access network node. The access network node completes SLAM construction based on the raw measurement data uploaded by the user terminal. Subsequently, the access network node performs fusion processing on the local SLAM results of multiple user terminals to obtain a fused SLAM result. The access network node sends the fused SLAM result to the user terminal. After receiving the fused SLAM result delivered by the access network node, the user terminal uses the fused SLAM result together with subsequent raw measurement data for iteratively updating the SLAM result.

In another example of Embodiment 1, please refer to FIG. 10B, which illustrates a flowchart of another implementation of the collaborative sensing method shown in FIG. 10. As shown in FIG. 10B, the network-side node includes an access network node and a core network node. A user terminal receives an integrated downlink sensing signal from a base station and determines raw measurement data based on the downlink sensing signal, then uploads the raw measurement data to the access network node. The access network node sends the raw measurement data received from the user terminal to the core network node. The core network node completes SLAM construction based on the raw measurement data uploaded by the user terminal. Subsequently, the core network node performs fusion processing on the local SLAM results of multiple user terminals to obtain a fused SLAM result. The core network node sends the fused SLAM result to the access network node. The access network node delivers the fused SLAM result received from the core network node to the user terminal. After receiving the fused SLAM result delivered by the access network node, the user terminal uses the fused SLAM result together with subsequent raw measurement data for iteratively updating the SLAM result.

### Embodiment 2

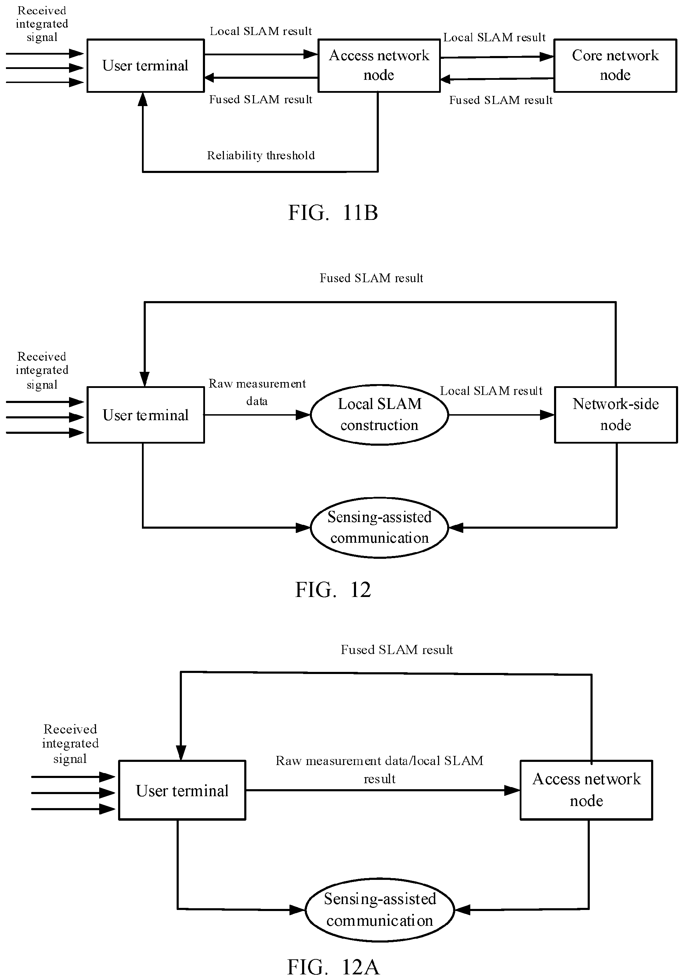

Please refer to FIG. 11, which illustrates a collaborative sensing method provided by an embodiment of the present disclosure. As shown in FIG. 11, a user terminal receives an integrated downlink sensing signal from a base station and determines raw measurement data based on the downlink sensing signal. The user terminal completes SLAM construction locally and obtains a reliability value of the local SLAM result. A network-side node delivers a reliability threshold. The user terminal receives the reliability threshold delivered by the network-side node and determines whether to upload the local SLAM result based on the reliability value of the locally constructed local SLAM result. If the reliability value of the local SLAM result is greater than the reliability threshold delivered by the network-side node, the user terminal uploads the local SLAM result. If the reliability value of the local SLAM result is less than the reliability threshold delivered by the network-side node, the user terminal does not upload the local SLAM result. The network-side node performs fusion processing on the local SLAM results uploaded by the user terminal to obtain a fused SLAM result. The network-side node delivers the fused SLAM result to the user terminal. The user terminal receives the fused SLAM result delivered by the network-side node and uses the fused SLAM result together with subsequent raw measurement data for iteratively updating the SLAM result.

In an example of Embodiment 2, please refer to FIG. 11A, which illustrates a flowchart of an implementation of the collaborative sensing method shown in FIG. 11. As shown in FIG. 11A, the network-side node is an access network node. The user terminal receives an integrated downlink sensing signal from a base station and determines raw measurement data based on the downlink sensing signal. The user terminal completes SLAM construction locally and obtains a reliability value of the local SLAM result. The access network node delivers a reliability threshold. The user terminal receives the reliability threshold delivered by the access network node and determines whether to upload the local SLAM result based on the reliability value of the locally constructed local SLAM result. If the reliability value of the local SLAM result is greater than the reliability threshold delivered by the access network node, the user terminal uploads the local SLAM result. If the reliability value of the local SLAM result is less than the reliability threshold delivered by the access network node, the user terminal does not upload the local SLAM result. The access network node performs fusion processing on the local SLAM results uploaded by the user terminal to obtain a fused SLAM result. The access network node delivers the fused SLAM result to the user terminal. The user terminal receives the fused SLAM result delivered by the access network node and uses the fused SLAM result together with subsequent raw measurement data for iteratively updating the SLAM result.

In another example of Embodiment 2, please refer to FIG. 11B, which illustrates another flowchart of an implementation of the collaborative sensing method shown in FIG. 11. As shown in FIG. 11B, the network-side node includes an access network node and a core network node. A user terminal receives an integrated downlink sensing signal from a base station and determines raw measurement data based on the downlink sensing signal. The user terminal completes SLAM construction locally and obtains a reliability value of the local SLAM result. The access network node delivers a reliability threshold. The user terminal receives the reliability threshold delivered by the access network node and determines whether to upload the local SLAM result based on the reliability value of the locally constructed local SLAM result. If the reliability value of the local SLAM result is greater than the reliability threshold delivered by the access network node, the user terminal uploads the local SLAM result. If the reliability value of the local SLAM result is less than the reliability threshold delivered by the access network node, the user terminal does not upload the local SLAM result. The access network node sends the local SLAM results uploaded by the user terminals to the core network node. The core network node performs fusion processing on the local SLAM results corresponding to the user terminals to obtain a fused SLAM result. The core network node sends the fused SLAM result to the access network node. The access network node delivers the fused SLAM result to the user terminal. The user terminal receives the fused SLAM result delivered by the access network node and uses the fused SLAM result together with subsequent raw measurement data for iteratively updating the SLAM result.

### Embodiment 3

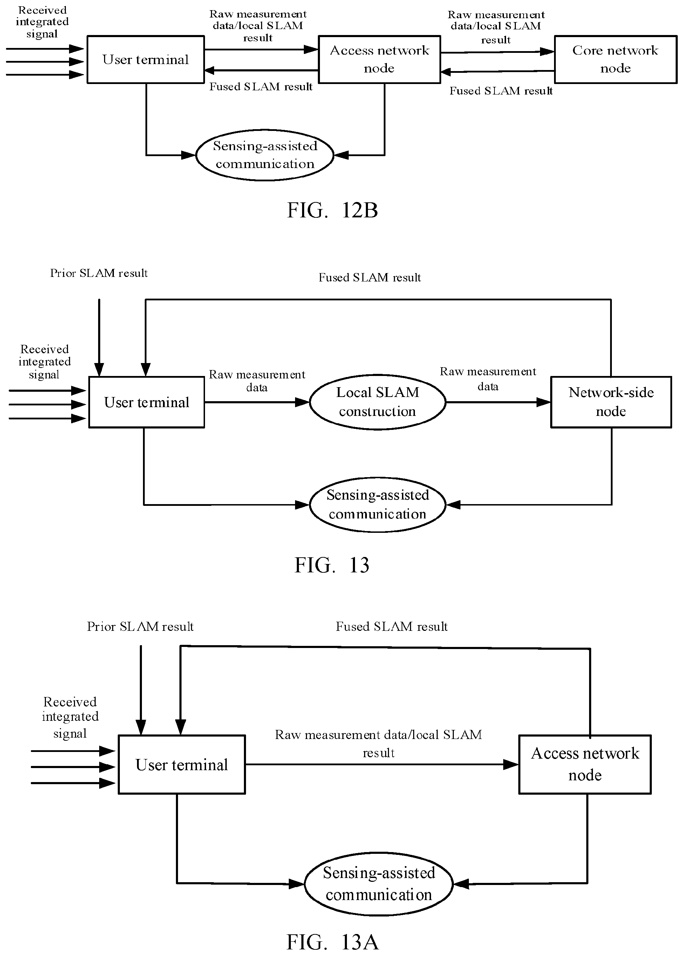

Please refer to FIG. 12, which illustrates a collaborative sensing method provided by an embodiment of the present disclosure. As shown in FIG. 12, a network-side node delivers a fused SLAM result to a user terminal. The user terminal uses the fused SLAM result to assist communication between the user terminal and a base station, avoiding obstructions caused by obstacles and improving communication performance, including beamforming, channel estimation and reconstruction, among others.

For example, the network-side node delivers the fused SLAM result to the user terminal. The user terminal performs adaptive beamforming based on the fused SLAM result, reducing the impact of obstacles on the communication performance of the user terminal and enhancing the communication performance between the user terminal and the network-side node. As another example, the network-side node delivers the fused SLAM result to the user terminal. Based on the fused SLAM result and combined with corresponding algorithms, the user terminal acquires channel state information between the user terminal and the network-side node, thereby reducing the system overhead for channel measurement, estimation, and feedback, and improving system performance.

In an example of Embodiment 3, please refer to FIG. 12A, which illustrates a flowchart of an implementation of the collaborative sensing method shown in FIG. 12. As shown in FIG. 12A, the network-side node is an access network node. The access network node delivers the fused SLAM result to the user terminal, and the user terminal uses the fused SLAM result to assist communication between the user terminal and the access network node.

In another example of Embodiment 3, please refer to FIG. 12B, which illustrates a flowchart of another implementation of the collaborative sensing method shown in FIG. 12. The network-side node includes an access network node and a core network node. The core network node performs fusion processing on the local SLAM results of multiple user terminals to obtain a fused SLAM result. Subsequently, the core network node sends the fused SLAM result to the access network node. The access network node delivers the fused SLAM result to the user terminal, and the user terminal uses the fused SLAM result to assist communication between the user terminal and the access network node.

### Embodiment 4

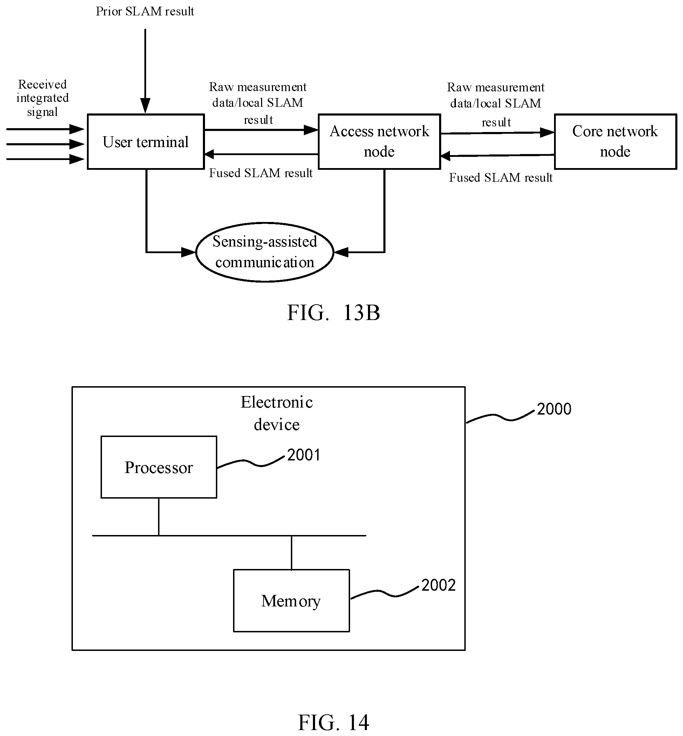

Please refer to FIG. 13, which illustrates a collaborative sensing method provided by an embodiment of the present disclosure. As shown in FIG. 13, when a new user terminal enters the service area of a base station, the network-side node sends a constructed fused SLAM result to the new user terminal. The new user terminal receives the fused SLAM result delivered by the network-side node and uses the fused SLAM result to assist in updating its SLAM result within the observation field of view, enabling the new user terminal to quickly obtain a more accurate and comprehensive SLAM result.

In an example of Embodiment 4, please refer to FIG. 13A, which illustrates a flowchart of an implementation of the collaborative sensing method shown in FIG. 13. As shown in FIG. 13A, the network-side node is an access network node. When a new user terminal enters the service area of a base station, the access network node sends a constructed fused SLAM result to the new user terminal. The new user terminal receives the fused SLAM result delivered by the access network node and uses the fused SLAM result to assist in updating its SLAM result within the observation field of view.

In another example of Embodiment 4, please refer to FIG. 13B, which illustrates a flowchart of another implementation of the collaborative sensing method shown in FIG. 13. As shown in FIG. 13B, the network-side node includes an access network node and a core network node. When a new user terminal enters the service area of a base station, the access network node sends the fused SLAM result constructed by the core network node to the new user terminal. The new user terminal receives the fused SLAM result delivered by the access network node and uses the fused SLAM result to assist in updating its SLAM result within the observation field of view.

Please refer to FIG. 14, an embodiment of the present disclosure further provides an electronic device. The electronic device 2000 includes, but is not limited to:
at least one processor 2001;
at least one memory 2002, configured to store at least one program;
the at least one program, when executed by the at least one processor 2001, causes the at least one processor 2001 to perform the collaborative sensing method applied to a user terminal in any of the above embodiments, or perform the collaborative sensing method applied to a network-side node in any of the above embodiments.

It should be understood that the processor 2001 and the memory 2002 may be connected via a bus or other means.

It should be understood that the processor 2001 may adopt a Central Processing Unit (CPU). The processor may also be other general-purpose processor, a Digital Signal Processor (DSP), an Application Specific Integrated Circuit (ASIC), a Field Programmable Gate Array (FPGA), or other programmable logic devices, discrete gate or transistor logic device, discrete hardware component, etc. The general-purpose processor may be a microprocessor, or the processor may also be any conventional processor, etc. Alternatively, the processor 2001 may be implemented as one or more integrated circuits to execute relevant programs, thereby implementing the technical solutions provided by the embodiments of the present disclosure.

The memory 2002, as a non-transitory computer-readable storage medium, may be used to store non-transitory software programs and non-transitory computer-executable programs, such as the collaborative sensing method performed by a user terminal in any embodiment of the present disclosure. The processor 2001, by running the non-transitory software programs and instructions stored in the memory 2002, implements the collaborative sensing method applied to a user terminal in any of the above embodiments; or, implements the collaborative sensing method applied to a network-side node in any of the above embodiments.

The memory 2002 may include a program storage area and a data storage area, where the program storage area may store an operating system and an application program required for at least one functionality. The data storage area may store data for executing the collaborative sensing method as described above. Furthermore, the memory 2002 may include a high-speed random access memory and may also include a non-transitory memory, such as at least one magnetic disk storage device, flash memory device, or other non-transitory solid-state storage device.

In some implementations, the memory 2002 may optionally include memories remotely located relative to the processor 2001, and these remote memories may be connected to the processor 2001 via a network. Examples of the above network include, but are not limited to, the Internet, an intranet, a local area network, a mobile communication network, or combinations thereof.

The non-transitory software programs and instructions required to implement the above collaborative sensing method are stored in the memory 2002, and when executed by one or more processors 2001, cause the one or more processors 2001 to perform the collaborative sensing method in any embodiment of the present disclosure.

An embodiment of the present disclosure further provides a computer-readable storage medium, where the computer-readable storage medium stores a computer program which, when executed by a processor, implements the collaborative sensing method applied to a user terminal in any of the above embodiments; or implements the collaborative sensing method applied to a network-side node in any of the above embodiments.

The computer storage medium according to an embodiment of the present disclosure may adopt any combination of one or more computer-readable media. The computer-readable medium may be a computer-readable signal medium or a computer-readable storage medium. The computer-readable storage medium may be, for example but not limited to, an electrical, magnetic, optical, electromagnetic, infrared, or semiconductor system, apparatus, or device, or any combination thereof. More specific examples (non-exhaustive) of the computer-readable storage medium include: an electrical connection with one or more wires, a portable computer disk, a hard disk, a random access memory (RAM), a read-only memory (ROM), an erasable programmable read-only memory (EPROM) or flash memory, an optical fiber, a portable compact disk read-only memory (CD-ROM), an optical storage device, a magnetic storage device, or any suitable combination thereof. In this document, the computer-readable storage medium may be any tangible medium that contains or stores a program, which can be used by or in conjunction with an instruction execution system, apparatus, or device.

The computer-readable signal medium may include a propagated data signal in baseband or as part of a carrier wave, bearing computer-readable program code. Such propagated data signal may take various forms, including but not limited to an electromagnetic signal, an optical signal, or any suitable combination thereof. The computer-readable signal medium may also be any computer-readable medium other than the computer-readable storage medium, which can send, propagate, or transmit a program for use by or in conjunction with an instruction execution system, apparatus, or device.

The program code contained in a computer-readable medium may be sent via any suitable medium, including but not limited to a wireless medium, a wire, an optical fiber cable, radio frequency (RF), or any suitable combination thereof.

The computer program code for carrying out operations of the present disclosure may be written in one or more programming languages or a combination thereof, including object-oriented programming languages-such as Java, Smalltalk, C++, as well as conventional procedural programming languages-such as the "C" language or similar programming languages. The program code may be executed entirely on a user computer, partly on the user computer, as a stand-alone software package, partly on the user computer and partly on a remote computer, or entirely on a remote computer or server. In scenarios involving a remote computer, the remote computer may be connected to the user computer through any type of network, including a local area network (LAN) or a wide area network (WAN), or may be connected to an external computer (for example, through an Internet service provider over the Internet).

Embodiments of the present disclosure further provide a computer program product. The computer program product stores program instructions which, when executed on a computer device, cause the computer device to implement the collaborative sensing method applied to a user terminal in any of the above embodiments; or, to implement the collaborative sensing method applied to a network-side node in any of the above embodiments.

While specific implementations of the present disclosure have been described above, the present disclosure is not limited to the aforementioned implementations. Those of ordinary skills in the art may make various equivalent modifications or substitutions without departing from the scope of the present disclosure, and all such equivalent modifications or substitutions are encompassed within the scope defined by the present disclosure.

## Claims

1. A collaborative sensing method, applied to a user terminal, the method comprising:
receiving a fused simultaneous localization and mapping, SLAM, result from a network-side node, wherein the fused SLAM result is obtained by the network-side node performing fusion processing on a plurality of first local SLAM results corresponding to respective user terminals;
receiving a first downlink signal from the network-side node;
determining a second local SLAM result based on the first downlink signal;
using the fused SLAM result as prior knowledge, and updating the second local SLAM result using the prior knowledge.

2. The method according to claim 1, further comprising:
receiving a second downlink signal from the network-side node;
determining SLAM construction information based on the second downlink signal and sending the SLAM construction information to the network-side node, so that the network-side node determines a first local SLAM result corresponding to the user terminal based on the SLAM construction information, and performs fusion processing on the first local SLAM result corresponding to the user terminal and at least one first local SLAM result corresponding to at least one other user terminal to obtain the fused SLAM result.

3. The method according to claim 2, wherein the SLAM construction information comprises raw measurement data; determining the SLAM construction information based on the second downlink signal and sending the SLAM construction information to the network-side node comprises:
determining the raw measurement data based on the second downlink signal;
sending the raw measurement data to the network-side node, so that the network-side node determines the first local SLAM result corresponding to the user terminal based on the raw measurement data received from the user terminal.

4. The method according to claim 2, wherein the SLAM construction information comprises the first local SLAM result of the user terminal; determining the SLAM construction information based on the second downlink signal and sending the SLAM construction information to the network-side node comprises:
determining raw measurement data based on the second downlink signal;
determining the first local SLAM result based on the raw measurement data;
sending the first local SLAM result to the network-side node.

5. The method according to claim 4, wherein sending the first local SLAM result to the network-side node comprises:
performing reliability analysis on the first local SLAM result to obtain a corresponding reliability value;
sending the first local SLAM result to the network-side node in response to the reliability value being greater than or equal to a preset reliability threshold.

6. The method according to claim 5, wherein the SLAM construction information further comprises the reliability value corresponding to the first local SLAM result;
the fusion processing comprises:
performing, by the network-side node, weighted fusion processing on the first local SLAM results corresponding to the respective user terminals based on the reliability values of the first local SLAM results corresponding to the respective user terminals, to obtain the fused SLAM result.

7. The method according to any one of claims 2-6, wherein each of the first local SLAM results comprises at least one of user terminal state information and environmental information.

8. The method according to claim 7, wherein the user terminal state information comprises at least one of: velocity information of the user terminal, position information of the user terminal, orientation information of the user terminal, or clock bias information of the user terminal.

9. The method according to claim 7, wherein the environmental information comprises at least one of: scattering surface information in an environment, scattering point position information in the environment, or scattering coefficient of the environment.

10. The method according to any one of claims 2-6, wherein the network-side node is an access network node.

11. The method according to any one of claims 2-6, wherein the network-side node comprises an access network node and a core network node; the access network node is configured to send the first downlink signal; the core network node is configured to perform the fusion processing and send the fused SLAM result to the user terminal.

12. The method according to claim 11, wherein the fused SLAM result is sent by the core network node to the access network node, and forwarded by the access network node to the user terminal.

13. The method according to claim 11, wherein the user terminal sends the SLAM construction information to the access network node, and the access network node forwards the SLAM construction information to the core network node.

14. A collaborative sensing method, applied to a network-side node, the method comprising:
obtaining a plurality of first local simultaneous localization and mapping, SLAM, results corresponding to respective user terminals;
performing fusion processing on the plurality of first local SLAM results corresponding to the respective user terminals, to obtain a fused SLAM result;
sending the fused SLAM result and a first downlink signal to at least one of the user terminals, so that the at least one of the user terminals determines a second local SLAM result based on the first downlink signal, uses the fused SLAM result as prior knowledge, and updates the second local SLAM result using the prior knowledge.

15. The method according to claim 14, wherein obtaining the plurality of first local simultaneous localization and mapping, SLAM, results corresponding to the respective user terminals comprises:
sending a second downlink signal to the plurality of the user terminals, so that each of the user terminals determines SLAM construction information based on the second downlink signal;
receiving the SLAM construction information sent by the plurality of user terminals;
obtaining the first local SLAM results corresponding to the respective user terminals based on the SLAM construction information sent by the respective user terminals.

16. The method according to claim 15, wherein the SLAM construction information comprises raw measurement data corresponding to the respective user terminal, and obtaining the first local SLAM results corresponding to respective user terminals based on the SLAM construction information sent by the respective user terminals comprises:
determining the first local SLAM results corresponding to respective user terminals based on the raw measurement data sent by the respective user terminals.

17. The method according to claim 15, wherein the SLAM construction information comprises the respective first local SLAM result corresponding to the respective user terminal.

18. The method according to claim 17, wherein the SLAM construction information further comprises a reliability value corresponding to the respective first local SLAM result, and performing fusion processing on the plurality of first local SLAM results corresponding to the respective user terminals, to obtain the fused SLAM result comprises:
performing weighted fusion processing on the first local SLAM results corresponding to the respective user terminals based on the reliability values of the first local SLAM results corresponding to the respective user terminals, to obtain the fused SLAM result.

19. The method according to claim 14, wherein sending the fused SLAM result and the first downlink signal to the at least one of the user terminals comprises:
in response to detecting that a new user terminal enters a service area, sending the fused SLAM result and the first downlink signal to the new user terminal.

20. The method according to any one of claims 14-19, wherein each of the first local SLAM results comprises at least one of user terminal state information, or environmental information.

21. The method according to claim 20, wherein the user terminal state information comprises at least one of: velocity information of the user terminal, position information of the user terminal, orientation information of the user terminal, or clock bias information of the user terminal.

22. The method according to claim 20, wherein the environmental information comprises at least one of: scattering surface information in an environment, scattering point position information in the environment, or scattering coefficient of the environment.

23. The method according to any one of claims 15-19, wherein the network-side node is an access network node.

24. The method according to any one of claims 15-19, wherein the network-side node comprises an access network node and a core network node; the access network node is configured to send the first downlink signal and the second downlink signal; the core network node is configured to perform the fusion processing and send the fused SLAM result to the at least one of the user terminals.

25. The method according to claim 24, wherein the fused SLAM result is sent by the core network node to the access network node, and forwarded by the access network node to the at least one of the user terminals.

26. The method according to claim 24, wherein the SLAM construction information sent by the at least one of the user terminals is received by the access network node and sent by the access network node to the core network node.

27. An electronic device, comprising:
one or more processors;
a memory, having stored thereon one or more programs, wherein the one or more programs, when executed by the one or more processors, cause the one or more processors to implement the collaborative sensing method according to any one of claims 1-13; or, to implement the collaborative sensing method according to any one of claims 14-26.

28. A computer-readable storage medium, having stored thereon a computer program, wherein the program, when executed by a processor, implements the collaborative sensing method according to any one of claims 1-13; or, the collaborative sensing method according to any one of claims 14-26.
